# EUROPEAN PATENT APPLICATION

(11) **EP 4 843 374 A1**
(43) Date of publication of application: **25.11.2026**
(21) Application number: 26168684.4
(22) Date of filing: 27.03.2026
(51) Int. Cl.: A01C 15/04

(54) **DEFLECTOR AND VEHICLE WITH SUCH**

(30) Priority: 21.05.2025 US 202563809717 P; 02.03.2026 US 202619553600
(71) Applicant: Deere & Company, Moline, IL 61265 (US)
(72) Inventor: Mukhobadhyay, Sourabh, 68163 Mannheim (DE); Sukalski, Michael, 68163 Mannheim (DE); Thelen, Kevin A., 68163 Mannheim (DE); Rao, Srinivasakumar, 68163 Mannheim (DE); Shete, Viraj 2, 68163 Mannheim (DE)
(74) Representative: Reichert, Christian

(57) **Abstract**

A deflector (80, 82) for a boom arm (38, 40, 60) of an agricultural vehicle (10) is disclosed. The deflector (80, 82) comprising: a distribution portion (84, 86) configured to be coupleable to a tube (62) of a boom arm (38, 40, 60); and a flap (88, 90) extending from an end of the distribution portion (84, 86), the flap (88, 90) having an inner surface (100, 102) facing the distribution portion (84, 86), an outer surface (104, 106), and a plurality of protrusions (108, 110) spaced along the inner surface (100, 102) for receiving material from the distribution portion (84, 86) to direct the material downward and laterally. Furthermore, a vehicle (10) with such deflector is disclosed.

## Description

### FIELD

The present disclosure relates to an application system for an agricultural vehicle and, more particularly, to an application system having one or more booms arms having tubes and deflectors.

### BACKGROUND

Agricultural vehicles may be provided for applying nutrients to a field, such as fertilizer. The agricultural vehicle may include a pair of boom arms movable between a stowed position for transport and a deployed position for applying the nutrients to the field.

### SUMMARY

This Summary is provided to introduce a selection of concepts in a simplified form that are further described below in the Detailed Description. This Summary is not intended to identify key factors or essential features of the claimed subject matter, nor is it intended to be used to limit the scope of the claimed subject matter.

In one implementation, a deflector for a boom arm of an agricultural vehicle is provided. The deflector includes a distribution portion configured to be coupled to a tube of the boom arm, and a flap extending from an end of the distribution portion, the flap having an inner surface facing the distribution portion, an outer surface, and a plurality of protrusions spaced along the inner surface for receiving material from the distribution portion to direct the material downward and laterally.

The plurality of protrusions may be staggered along the inner surface of the flap.

The plurality of protrusions may be hemispherical.

The flap may include a plurality of rows of protrusions, and wherein the protrusions in each row of protrusions are staggered relative to the protrusions in an adjacent row.

The plurality of protrusions may be spaced such that protrusions are provided at a top, bottom, sides, and central portion of the flap.

The distribution portion may be curved to direct material from a lateral direction to a rearward direction substantially perpendicular to the lateral direction.

The flap may be substantially trapezoidal in shape.

The plurality of protrusions may be hemispherical protrusions staggered along the inner surface of the flap.

The flap may include a plurality of rows of hemispherical protrusions, and wherein the hemispherical protrusions in each row of hemispherical protrusions are staggered relative to the hemispherical protrusions in an adjacent row.

In another implementation, a boom arm of an agricultural vehicle may be provided. The boom arm includes a plurality of tubes having different lengths than one another, each tube having at least one outlet, and a deflector coupled to each of the plurality of tubes at the respective outlet, each deflector including a distribution portion coupled to the respective tube for receiving material from the outlet, and a flap extending from an end of the distribution portion, the flap having an inner surface facing the distribution portion, an outer surface, and a plurality of protrusions spaced along the inner surface for receiving material from the distribution portion to direct the material downward and laterally.

The plurality of protrusions on each flap may be staggered along the respective inner surface. The plurality of protrusions on each flap may be hemispherical.

Each flap may include a plurality of rows of protrusions, and wherein the protrusions in each row of protrusions are staggered relative to the protrusions in an adjacent row.

The distribution portion may be curved to direct material from a lateral direction to a rearward direction substantially perpendicular to the lateral direction.

Each flap may increase in width from a top of the flap to a bottom of the flap.

In still another implementation, a vehicle is provided that includes a frame, and an application system removably mounted to the frame, the application system including a first boom arm extending outward from a first side of the vehicle and a second boom arm extending outward from a second side of the vehicle, the first and second boom arms each including a plurality of tubes having different lengths than one another, each tube having at least one outlet, and a deflector coupled to each of the plurality of tubes at the respective outlet, each deflector including a distribution portion coupled to the respective tube for receiving material from the outlet, and a flap extending from an end of the distribution portion, the flap having an inner surface facing the distribution portion, an outer surface, and a plurality of protrusions spaced along the inner surface for receiving material from the distribution portion to direct the material downward and laterally.

The plurality of protrusions may be staggered along the inner surface of the flap.

The plurality of protrusions may be hemispherical.

The flap may include a plurality of rows of protrusions, and wherein the protrusions in each row of protrusions are staggered relative to the protrusions in an adjacent row.

The flap may include a plurality of rows of hemispherical protrusions, and wherein the hemispherical protrusions in each row of hemispherical protrusions are staggered relative to the hemispherical protrusions in an adjacent row.

To the accomplishment of the foregoing and related ends, the following description and annexed drawings set forth certain illustrative aspects and implementations. These are indicative of but a few of the various ways in which one or more aspects may be employed. Other aspects, advantages and novel features of the disclosure will become apparent from the following detailed description when considered in conjunction with the annexed drawings.

### BRIEF DESCRIPTION OF THE DRAWINGS

What is disclosed herein may take physical form in certain parts and arrangement of parts, and will be described in detail in this specification and illustrated in the accompanying drawings which form a part hereof and wherein:
FIG. 1 is a perspective view of a vehicle.
FIG. 2 is a front perspective view of a boom arm.
FIG. 3 is a rear perspective view of the boom arm.
FIG. 4 is a rear view of a first deflector of the boom arm.
FIG. 5 is a rear perspective view of a flap of the first deflector.

### DETAILED DESCRIPTION

The claimed subject matter is now described with reference to the drawings, wherein like reference numerals are generally used to refer to like elements throughout. In the following description, for purposes of explanation, numerous specific details are set forth in order to provide a thorough understanding of the claimed subject matter. It may be evident, however, that the claimed subject matter may be practiced without these specific details. In other instances, structures and devices are shown in block diagram form in order to facilitate describing the claimed subject matter.

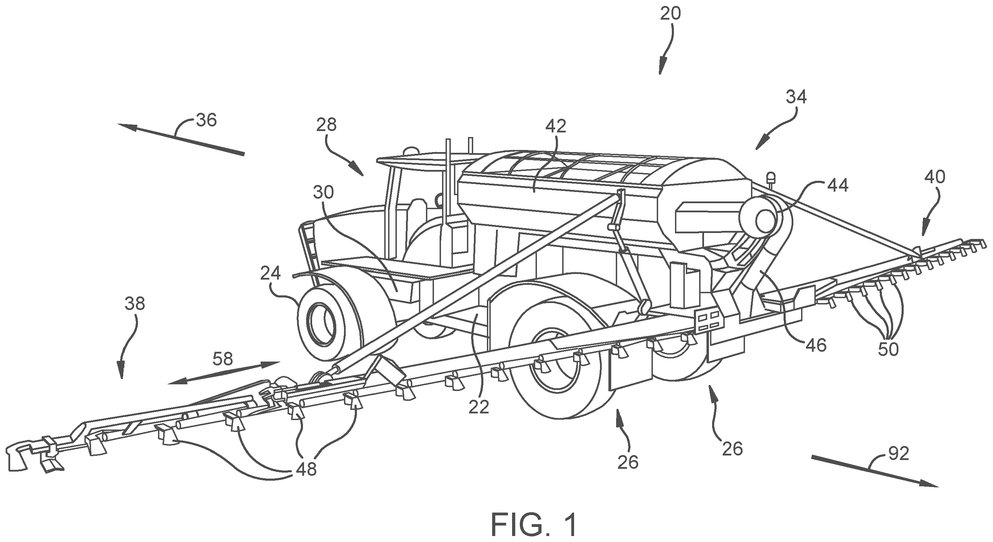

Referring initially to FIG. 1, a vehicle, such as an agricultural vehicle, such as an agricultural dry nutrient applicator, is shown at reference numeral 10. The vehicle 10 includes a frame 22, front ground engaging devices 24 such as wheels or tracks, rear ground engaging devices 26 such as tires or tracks, a vehicle cab 28, and a prime mover 30. The prime mover may be a suitable engine, such as a diesel engine, or alternatively may be replaced by a suitable electric motor assembly. In some applications, an air seeder is utilized in place of the illustrated dry nutrient applicator.

An application system 34 may be removably mounted to the frame 22 and positioned rearward of the cab 28 in a direction opposite of a direction of forward travel 36. The application system 34 has a first boom arm 38 and a second boom arm 40, one or more material holding tanks 42 for holding dry material, a blower 44 and a conduit 46. The first boom arm 38 extends outward from one side of the vehicle 10 (left of the cab 28) and includes a plurality of outlets 48. The second boom arm 40 extends outward from the other side of the vehicle 10 (right of the cab 28) and includes a plurality of outlets 50. The first and second boom arms 38 and 40 are movable between a deployed position and a stowed position. The one or more material holding tanks 42 are configured to retain one or more types of dry material, such as fertilizer, for distribution onto a ground surface. The blower 44 is configured to move the dry material from the one or more material holding tanks 42 and into the first boom arm 38 and the second boom arm 40 and subsequently out of the plurality of outlets 48 and 50 onto a ground surface. While each illustrated first and second boom arm 38 and 40 includes a plurality of outlets, only some of the outlets are labeled in FIG. 1. In some embodiments, the outlets are evenly spaced along the first and second boom arms 38 and 40. Other configurations and quantities of outlets are possible.

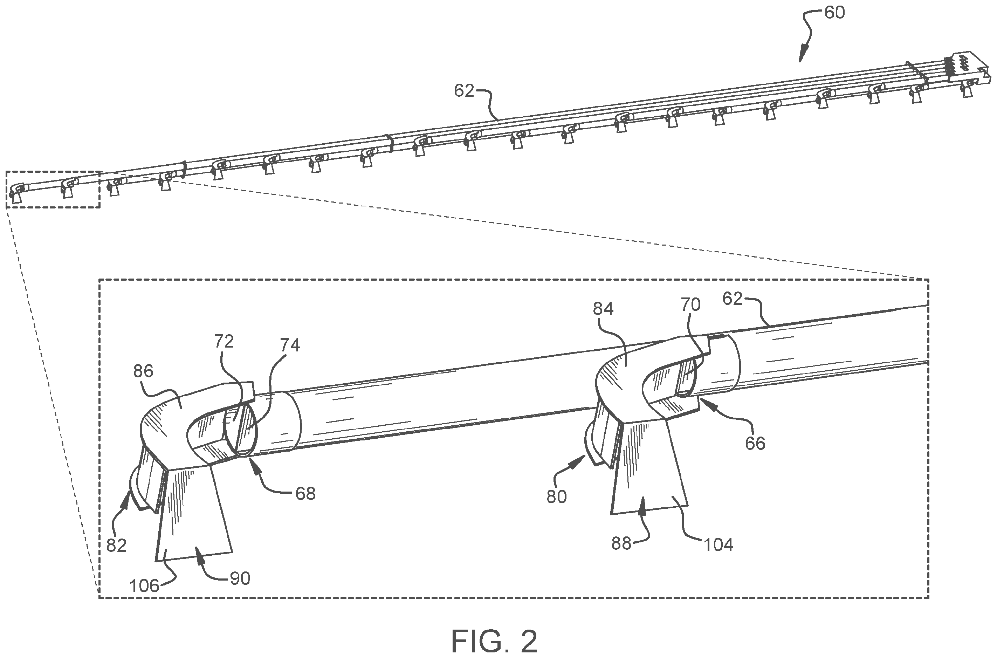

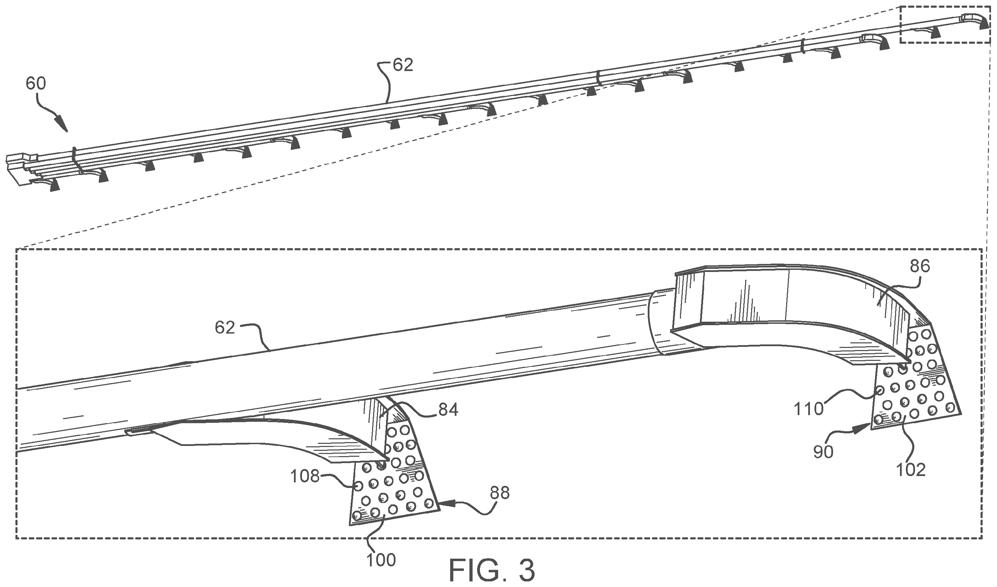

Turning now to FIGS. 2 and 3, an exemplary first boom arm is shown by reference numeral 60. The first boom arm 60 is shown in the deployed position and is movable to a stowed position. A second boom arm (not shown) may be substantially a mirror image of the first boom arm 60 and thus the description of the first boom arm 60 is equally applicable to the second boom arm. The first boom arm 60 and the second boom arm (not shown) may replace the first and second boom arms 38 and 40.

The first boom arm 60 includes a plurality of tubes 62 that extend in a widthwise direction 58 (FIG. 1) substantially perpendicular to the direction of forward travel 36 when in the deployed position and a housing 64 having a plurality of openings for receiving a respective one of the plurality of tubes 62. The plurality of tubes 62 have progressively longer lengths such that each tube 62 extends further away from the conduit 46 than an adjacent tube to space outlets of the tubes 62 from one another. The first boom arm 60 is shown having ten tubes 62, although it will be appreciated that any suitable number of tubes may be used. The plurality of tubes 62 may be provided in in two rows of tubes 62, such as a first row of tubes 62 and a second row of tubes 62 below the first row of tubes. In an implementation with ten tubes 62, the first row of tubes 62 may have five tubes and the second row of tubes 62 may have five tubes. The tubes 62 may be arranged in the rows in a suitable arrangement. For example, the shortest tube 62 may be in the second row of tubes 62, the second shortest tube 62 may be in the first row of tubes 62, the third shortest tube 62 may be in the second row of tubes 62, the fourth shortest tube 62 may be in the first row of tubes 62, and so on.

The enlarged view in FIGS. 2 and 3 illustrates an end of one of the tubes 62, which is the tube that extends the longest length. It will be appreciated that the description of the tube 62 shown is equally applicable to the other tubes. The tube 62 includes at least one outlet, and as shown each tube includes a first outlet 66 and a second outlet 68, although it will be appreciated that each tube 62 may have any suitable number of outlets. The first outlet 66 is formed by a first opening 70 in the tube 62, and the second outlet 68 is formed by a second opening 72 at an end of the tube 62 further from the blower 44 than the first opening 70. Extending along at least a portion of a length of the tube 62 is a divider 74 that divides the dry material blown down the tube 62 substantially equally between the first outlet 66 and the second outlet 68.

A first deflector 80 is coupled to the tube 62 at the first opening 70 and a second deflector 82 is coupled to the tube 62 at the second opening 72. The first and second deflectors 80 and 82 may be coupled to the tube 62 in a suitable manner, such as by suitable clamps clamped to the tube 62 that may be removed to allow for replacement of the deflectors. The first and second deflectors 80 and 82 each include a distribution portion 84, 86 and a flap 88, 90. The distribution portions 84 and 86 each include a portion that surrounds the end of the respective tube 62 to couple to the tube, and a curved portion extending therefrom to direct the material from the widthwise direction 58 or lateral direction to a rearward direction 96 (FIG. 1) substantially perpendicular to the widthwise direction 58 and opposite the direction of forward travel 36.

The flaps 88 and 90 extend from the ends of the curved portions 84 and 86, respectively, and are angled relative to the curved portions 84 and 86 to direct material downward and to spread material side to side to overlap with material directed from adjacent flaps. In an implementation, the flaps 88 and 90 may be angled relative to the curved portions 84 and 86 about 45-65 degrees. In an implementation, the flaps 88 and 90 may be angled relative to the curved portions 84 and 86 about 50-60 degrees. The flaps 88 and 90 may have a suitable shape, such as a shape that increased in width from a top of the flap to a bottom of the flap, for example substantially trapezoidal in shape, and the flaps 88 and 90 may have varying angles relative to the curved portions 84 and 86 or may be adjustable relative to the curved portions 84 and 86 to adjust the angles. The flaps 88 and 90 may be coupled to the respective curved portions 84 and 86 in a suitable manner, or the flaps 88 and 90 may be integrally formed with the respective curved portions 84 and 86.

The flaps 88 and 90 each have an inner surface 100, 102 facing the respective curved portions 84 and 86 and an outer surface 104, 106 facing the opposite direction. The inner surfaces 100 and 102 each include a plurality of protrusions 108, 110 extending away from the inner surfaces 100 and 102 toward the curved portions 84 and 86. For example, the protrusions 108 and 110 may be in the form of dimples, such as hemispherical shaped dimples, ribbing, or other surface feature projecting from the inner surface 100, 102 to increase randomization of material that contacts the flaps 88 and 90 to spread material more evenly across a ground surface in both horizontal and hilly terrain. The protrusions 108 and 110 may be coupled to the respective flaps 88 and 90 in a suitable manner, or the protrusions 108 and 110 may be integrally formed with the respective flaps 88 and 90.

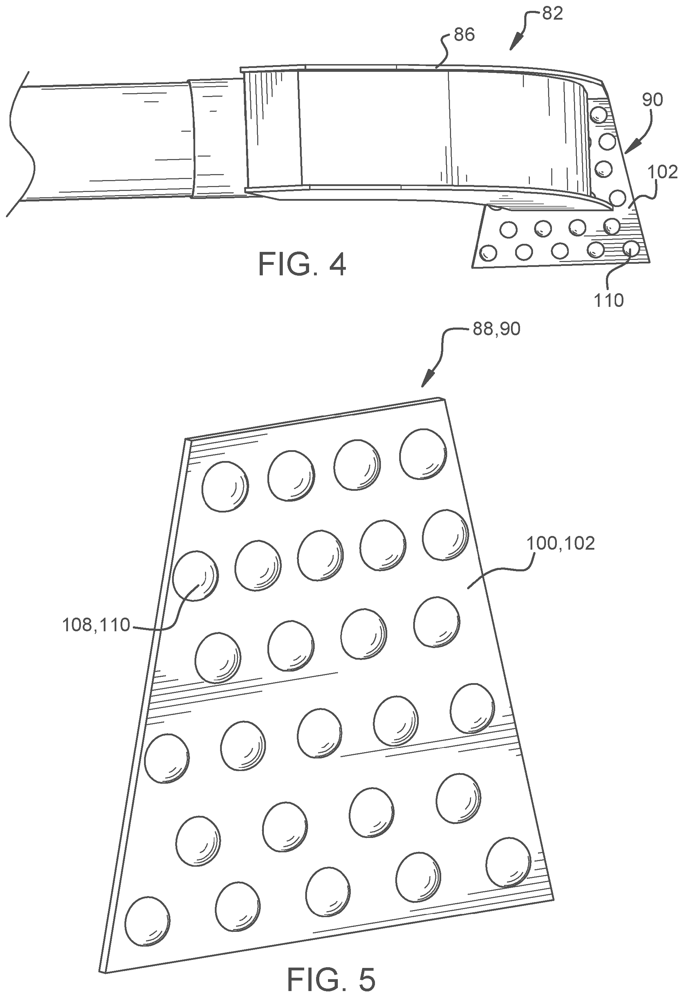

As shown in FIGS. 4 and 5, the plurality of protrusions 108 and 110 may be spaced along the respective inner surfaces 100 and 102 to cover a substantial portion of the inner surfaces 100 and 102. The plurality of protrusions 108, 110 may be spaced along the inner surfaces 100 and 102 such that the protrusions 108, 110 are provided at a top, bottom, sides, and central portion of the flaps 88, 90. For example, the protrusions 108 and 110 may be staggered from one another to increase randomization of the distribution of the material thereby improving distribution across the ground surface.

The flaps 88 and 90 may include a plurality of rows or columns of protrusions 108 and 110, for example, such as a plurality of rows of protrusions 108 and 110 where each row includes protrusions 108, 110 that are staggered relative to the protrusions 108, 110 in an adjacent row. As shown, each flap 88, 90 includes six rows of protrusions 108, 110, where the rows alternate between four and five protrusions 108, 110 per row staggered relative to the protrusions 108, 110 in the adjacent row, although it will be appreciated that any suitable number of rows and protrusions may be provided. For example, the uppermost row of protrusions 108 and 110 may have four protrusions 108 and 110, the second row may have five protrusions 108 and 110, the third row may have four protrusions 108 and 110, the fourth row may have five protrusions 108 and 110, the fifth row may have four protrusions 108 and 110, and the sixth row may have five protrusions 108 and 110. The spacing between the protrusions 108, 110 in the same row may differ moving from top to bottom of the flaps 88 and 90, and the spacing may be uniform for protrusions 108 and 110 in the same row. For example, the spacing between the protrusions 108 and 110 in the sixth or bottommost row may be greater than the spacing between the protrusions 108 and 110 in the fifth row. It will be appreciated, however, that any suitable number of rows with protrusions having suitable spacing from one another may be used.

The protrusions 108 and 110 result in increased performance at a lower power rate, thereby reducing operational costs. The protrusions 108 and 110 also increase a cone angle of material increasing an overlap of the cone angle of the material. The protrusions 108 and 110 also result in a reduced coefficient of variation, which relates to material on the ground surface that is above and below an average rate.

## Claims

1. A deflector (80, 82) for a boom arm (38, 40, 60) of an agricultural vehicle (10), the deflector (80, 82) comprising:
a distribution portion (84, 86) configured to be coupleable to a tube (62) of a boom arm (38, 40, 60); and
a flap (88, 90) extending from an end of the distribution portion (84, 86), the flap (88, 90) having an inner surface (100, 102) facing the distribution portion (84, 86), an outer surface (104, 106), and a plurality of protrusions (108, 110) spaced along the inner surface (100, 102) for receiving material from the distribution portion (84, 86) to direct the material downward and laterally.

2. The deflector (80, 82) according to claim 1, wherein the plurality of protrusions (108, 110) are staggered along the inner surface (100, 102) of the flap (88, 90).

3. The deflector (80, 82) according to claim 1 or 2, wherein the plurality of protrusions (108, 110) are hemispherical.

4. The deflector (80, 82) according to one of the claims 1 to 3, wherein the flap (88, 90) includes a plurality of rows of protrusions (108, 110), and wherein the protrusions (108, 110) in each row of protrusions (108, 110) are staggered relative to the protrusions (108, 110) in an adjacent row.

5. The deflector (80, 82) according to one of the claims 1 to 4, wherein the plurality of protrusions (108, 110) are spaced such that protrusions (108, 110) are provided at a top, bottom, sides, and central portion of the flap (88, 90).

6. The deflector (80, 82) according to one of the claims 1 to 5, wherein the distribution portion (84, 86) is curved to direct material from a lateral direction to a rearward direction substantially perpendicular to the lateral direction.

7. The deflector (80, 82) according to one of the claims 1 to 6, wherein the flap (88, 90) is substantially trapezoidal in shape.

8. The deflector (80, 82) according to one of the claims 1 to 7, wherein each flap (88, 90) increases in width from a top of the flap (88, 90) to a bottom of the flap (88, 90).

9. The deflector (80, 82) according to one of the claims 1 to 8, wherein the plurality of protrusions (108, 110) are hemispherical protrusions (108, 110) staggered along the inner surface (100, 102) of the flap (88, 90).

10. The deflector (80, 82) according to one of the claims 1 to 9, wherein the flap (88, 90) includes a plurality of rows of hemispherical protrusions (108, 110), and wherein the hemispherical protrusions (108, 110) in each row of hemispherical protrusions (108, 110) are staggered relative to the hemispherical protrusions (108, 110) in an adjacent row.

11. A vehicle (10) comprising:
a frame (22); and
an application system (34) removably mounted to the frame (22), the application system (34) including a first boom arm (38) extending outward from a first side of the vehicle (10) and a second boom arm (40) extending outward from a second side of the vehicle (10), the first and second boom arms (38, 40) each including:
a plurality of tubes (62) having different lengths than one another, each tube (62) having at least one outlet; and
a deflector (80, 82) according to one of the claims 1 to 10, coupled to each of the plurality of tubes (62) at the respective outlet.
